# EUROPÄISCHE PATENTSCHRIFT

(11) **EP 0 683 931 B1**
(45) Veröffentlichungstag und Bekanntmachung des Hinweises auf die Patenterteilung: **23.04.1997**
(21) Anmeldenummer: 93902086.3
(22) Anmeldetag: 09.02.1993
(51) Int. Cl.: H02B 1/044

(54) **BEFEHLS- UND/ODER MELDEGERÄT**
CONTROL SWITCH AND/OR SIGNALLING UNIT
APPAREIL DE COMMANDE ET/OU DE SIGNALISATION

(43) Veröffentlichungstag der Anmeldung: 29.11.1995
(73) Patentinhaber: SIEMENS AKTIENGESELLSCHAFT, 80333 München (DE)
(72) Erfinder: ZIMMERMANN, Rudolf, D-92237 Sulzbach-Rosenberg (DE); BIRZER, Josef, D-8460 Schwandorf (DE); KREUTZER, Rainer, D-92637 Weiden (DE); HERDEGEN, Reinhard, D-92224 Amberg (DE)
(86) Internationale Anmeldenummer: DE9300106
(87) Internationale Veröffentlichungsnummer: WO9418731

(56) Entgegenhaltungen:
- DE-A- 19 740
- DE-U- 9 109 678
- FR-A- 2 188 716
- GB-A- 111 817

## Beschreibung

Die Erfindung betrifft ein Befehls- und/oder Meldegerät mit einer Rosette, die einen zylindrischen Teil aufweist, und mit einem Halter.

Derartige Befehls- und/oder Meldegeräte, die über einen auf die Rosette aufgeschobenen Halter an einem Befestigungsloch einer Montageplatte befestigt werden, sind bekannt (siehe Telemecanique Katalog G01, April 1975, z.B. Typ XBF-Z1). Der Halter weist hier eine Öffnung mit Innengewinde auf und ist auf den zylindrischen Teil der Rosette, der mit einem entsprechenden Außengewinde versehen ist, aufschraubbar. Weiterhin hat der Halter eine axial zum zylindrischen Teil verschiebbare Andruckplatte, die zur Befestigung der Rosette an die Montageplatte gepreßt wird. Dies geschieht über einen gezahnten Ring, der über eine außermittig gelagerte Welle mit entsprechender Verzahnung drehbar ist und der mit einem Steigungssegment versehen ist. Dieses liegt zumindest teilweise auf einem weiteren Steigungssegment eines Gegenstück. Der Ring verschiebt sich bei Drehung gemäß der Steigung der Steigungssegmente in axialer Richtung unter Mitnahme der Andruckplatte. Der Betätiger des Befehlsgeräts wird von der Frontseite aus auf einen von der Rückseite durch die Öffnung der Montageplatte eingeführten Halter aufgeschraubt. Bei einer größeren Fronttafel als Montageplatte ist demzufolge eine Einmann-Montage des Befehlsgeräts nicht möglich.

Weiterhin ist bei der Befestigung von Befehlsgeräten bekannt, diese mit einem Halter durch einen Bajonettverschluß zu verbinden (siehe DE 77 12 822.4). Aufgrund des Mitdreheffekts beim Einrasten des Halters ist auch hier ein Gegenhalten des Betätigers bei der Montage erforderlich. Ein weiterer Nachteil ist außerdem die umständliche Anpassung an die Dicke der Montagewand, die gemäß DIN-Norm zwischen 1 mm bis 6 mm variieren kann. Die Anpassung wird durch zwei gegenüberliegende Schrauben am Rand des Halters von der Rückseite her vorgenommen. Beide Schrauben werden in abwechselnden Schritten bis zum Andruck an die Montagewand hineingedreht. Aufgrund des dabei auftretenden punktförmigen Drucks ist es möglich, daß bei dünnen Fronttafeln, die z.B. aus Kunststoff hergestellt sind, sich ein Abdruck abbildet oder sogar die Montagewand zerstört wird. Dieselben Nachteile treten auch bei Befehlsgeräten mit Schnappverbindungen auf, bei denen ein Halter mit gefederten Rastelementen aufgeschnappt wird (siehe EP 03 30 956 A1). Auch hier muß der Betätiger bei der Montage festgehalten werden, damit er durch den Halter beim Aufschnappen nicht herausgedrückt wird. Bei der ebenfalls bekannten Ringmutter-Befestigung für Befehlsgeräte ist ebenfalls eine Einmann-Montage ausgeschlossen. Auch hier muß das Betätigungselement von der Frontseite her gehalten werden, um die Ringmutter zur Befestigung von der Rückseite her aufschrauben zu können. Dünne Fronttafeln erfordern lang-wieriges Aufschrauben, wozu meist noch ein spezieller Steckschlüssel benötigt wird.

Bei der Von-vorn-Montage mit Schnappnasen (siehe DE 31 45 070) werden Nasen nach Aufstecken des Betätigers durch Druck oder Verdrehen ausgelöst, die sich durch Federdruck an die Fronttafel anpressen. Auch hier bereitet jedoch die Anpassung an unterschiedliche Fronttafeldicken erheblichen Aufwand bzw. ist nur beschränkt möglich.

Eine wesentlich verbesserte Befehlsgerätebefestigung wird durch einen Halter gemäß dem Gebrauchsmuster G 91 09 678.2 erreicht. Mit diesem läßt sich schnell und auf einfache Weise das Befehls- und/oder Meldegerät an einer Montageplatte mit variabler Dicke über eine darin eingebrachte Öffnung befestigen. Dieser Halter stellt für die vorliegende Erfindung den nächstliegenden Stand der Technik dar und wird im folgenden zum besseren Verständnis der Erfindung näher beschrieben.

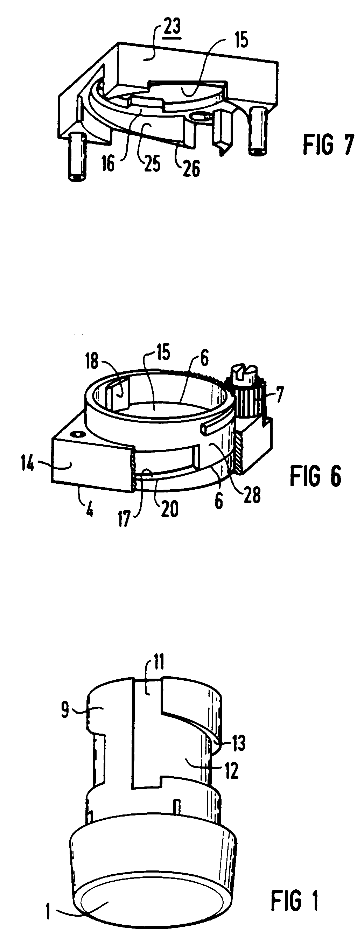

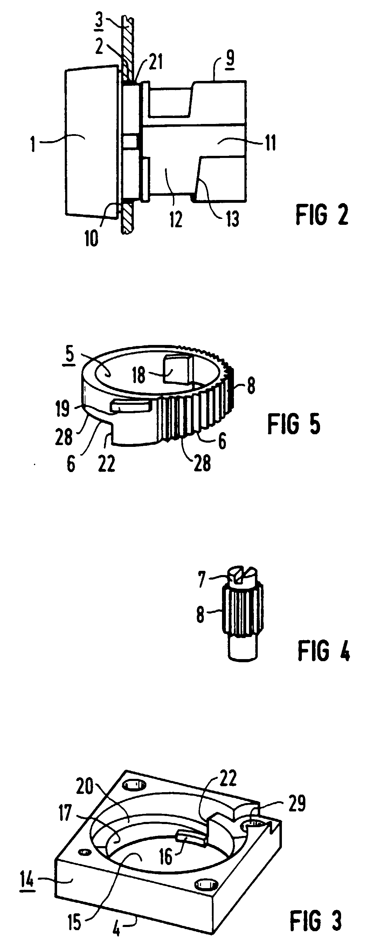

In FIG 1 ist eine Rosette 9 mit einem Frontring 1 eines Befehls- und Meldegeräts dargestellt, die über ein Befestigungsloch 2 einer Montageplatte bzw. Fronttafel 3 gemäß FIG 2 befestigt werden soll. Die Rosette 9 ragt an der Rückseite der Montageplatte 3 heraus. Sie ist als rohrförmiges Teil mit einem Außendurchmesser ausgebildet und mit wenigstens einer in Axialrichtung des Befestigungsloches 2 liegenden Längsnut 11 versehen. Von dieser ausgehend erstreckt sich eine Quernut 12 am Umfang der Rosette 9. Die der Montageplatte abgewandte Begrenzungskante der Quernut 12 ist schräg ausgeführt und dient als erstes Gewindesegment 13.

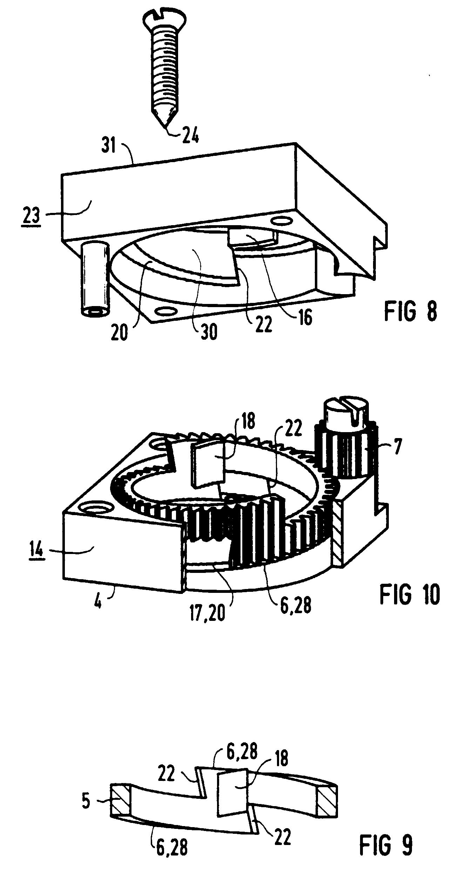

Die in den folgenden Figuren dargestellten Komponenten bilden zusammen einen Halter mit einer Öffnung 15, der auf die Rosette 9 aufsteckbar ist. FIG 3 zeigt hiervon das Gehäuseunterteil 14 mit der Öffnung 15, deren Innendurchmesser an den Außendurchmesser der Rosette 9 angepaßt ist. Das Gehäuseunterteil 14 weist an der durch seine Öffnung 15 gebildeten Innenwand neben einem Kopplungselement 16 zwei Steigungssegmente 17 auf. Diese winden sich mit einer Steigung 20 empor. Außermittig ist ein Bohrloch 29 zur Aufnahme einer gezahnten Welle 7 gemäß FIG 4 vorgesehen. FIG 5 zeigt einen Haltering 5 mit einer Verzahnung 8 an seinem äußeren Umfang, die an die Verzahnung der Welle 7 gemäß FIG 4 zum ineindergreifenden Betrieb mit dieser angepaßt ist. Die Oberseite des Halterings 5 ist gemäß einem ersten Ausführungsbeispiel nach FIG 5 eben ausgebildet. Demgegenüber weist die Unterseite zwei Steigungssegmente 28 mit der Steigung 6 auf, die der Steigung 20 der Steigungssegmente 17 vom Gehäuseunterteil 14 entspricht. Der Haltering 5 hat an seiner durch die Öffnung 15 gebildeten Innenwand einen Vorsprung in Form eines Teilgewindes 18. Ein erstes Gewindesegment 19 befindet sich auf dem Umfang des Halterings 5, dessen Steigungssegmente 28 mit jeweils einem als Anschlag dienenden Absatz 22 vesehen sind. FIG 6 zeigt die beschriebenen Komponenten im zusammengefügten Zustand, in dem die Steigungssegmente 28 und die Steigungssegmente 17 aufeinanderliegen und die Oberseite des Halterings 5 den ebenen Abschluß bildet. Zu dieser Einheit gehört ein aufsetzbares Gehäuseoberteil 23 gemäß FIG 7. Dieses hat an seiner durch die Öffnung 15 gebildeten Innenwand Steigungssegmente 25 mit einer Steigung 26. An dieser Innenwand ist ebenfalls ein Kopplungselement 16 vorhanden, welches in der speziellen Ausführungsform entfallen kann, bei der das Kopplungselement 16 an der Innenwand des Gehäuseunterteils 14 gemäß FIG 3 vorgesehen ist.

Die Befestigung des Befehlsgerätes an der Montageplatte 3 wird in folgenden Schritten durchgeführt:

Die Rosette 9 mit dem Frontring 1 des Befehlsgeräts wird von der Frontseite her in das Befestigungsloch 2 der Montageplatte 3 mittels einer Miniaturpreßpassung 21 eingesteckt wie in FIG 2 dargestellt. Das Herausfallen der Rosette 9 mit Frontring 1 durch ihr Eigengewicht wird dadurch verhindert. Der Halter wird dann von der Rückseite der Montageplatte 3 auf die Rosette 9 kraftlos aufgesteckt, wobei der Halter mittels des Kopplungselementes 16 und des Teilgewindes 18 in der Längsnut 11 geführt ist. Durch das Eingreifen des Kopplungselementes 16 in die Längsnut 11 ist der Halter gegen Verdrehen gesichert. Hierzu muß die Längsnut 11 sich über die Quernut 12 hinaus erstrecken, wenn das Kopplungselement 16 in der Innenwand des Gehäuseunterteils vorgesehen ist. Bei der Montage fluchten das Kopplungselement 16 und das Teilgewinde 18 in Axialrichtung des Befestigungsloches 2. Da nur Haltekräfte für das Eigengewicht des Befehlsgerätes benötigt werden, die durch Rippen, Butzen, Elastomer oder ähnlichem leicht aufzubringen sind, ermöglicht dies die sogenannte "Einmann-Montage". Vor dem bzw. beim Verspannen des Halters kann dieser winkelmäßig ausgerichtet werden. Der Halter wird durch wenige Rechtsdrehungen an der mit einem handelsüblichen Schraubendreher bedienbaren, außermittig angebrachten Welle 7 verspannt. Die Welle dreht dabei über die verzahnung 8 den Haltering 5, aer durch das Teilgewinde 18 und das gegenläufige Steigungssegment 28 sowohl hinter das Gewindesegment 13 auf der Rosette 9 greift, als auch sich selbst im Haltergehäuse in Richtung von der Montageplatte 3 wegbewegt und dadurch den Halter mit seiner ersten Andruckfläche 4 an die Montageplatte 3 preßt.

Dadurch wird mit minimalen Drehwinkel größtmöglicher Hub erreicht. Über die Kopplung des Befehlsgerätes mit dem Haltergehäuse in der oben genannten Längsnut 11 wird das Mitdrehmoment abgefangen, so daß keinerlei Verdreh-Tendenz während des Verspannes auftritt. Die zur Montage erforderliche korrekte Nullage des Halterings 5 und damit das Fluchten des Kopplungselementes 16 mit dem Teilgewinde 18 wird durch den Absatz 22 erreicht, der beim Linksdrehen der Welle 7 gegen den als Anschlag dienenden weiteren Absatz 22 am Gehäuseunterteil 4 stößt. Die axiale Rückführung des Halterings 5 bei der Demontage des Halters wird durch das zweite Gewindesegment 19 des Halterings bewirkt, welcher am Steigungssegment 25 mit der Steigung 26 des Gehäuseoberteils 23 eingreift.

Der Hub des Halters ergibt sich durch die axiale Verschiebung des Halterings und damit auch seines Teilgewindes 18 infolge der Drehung und zudem durch die als Gewindesegment 13 ausgebildete Begrenzungskante der Quernut 12, an der das Teilgewinde 18 eingreift. Bei einer vereinfachten Ausführungsform ist anstelle des Teilgewindes 18 ein rechteckförmiger, gerade ausgerichteter Vorsprung vorgesehen, und die Begrenzungskante der Quernut 12 ist nicht als Gewindesegment 13, sondern gerade verlaufend ausgeführt. Diese Ausbildung hat jedoch nur einen Hub aufgrund der Steigung des Halterings 5 in verbindung mit dem Gehäuseunterteil 14 zur Folge.

Die Plazierung des Gewindesegments 19 nahe dem Rand des Halterings 5 hält die Bauhöhe des Halters so gering wie möglich. Die Fertigung des Halters erfolgt montagefreundlich durch sukzessives vertikales Zuführen der Einzelteile.

Die Montage der kompletten Befehlsstelle erfolgt mit größt-möglicher Sicherheit, da ein Verkanten bzw. Schiefstellen des Halters durch sattes Anliegen an der Fronttafel-Rückseite ebenso vermieden wird wie ein eventuell nur teilweises Hinterrasten bzw. -schnappen.

Bei Anwendung des beschriebenen Halters zur Gerätebefestigung ist die Steigung der Gewindesegmente und damit der überdeckte Stärkenbereich der Montageplatte durch die erforderliche Selbsthemmung auf den Schrägen begrenzt.

Der Erfindung liegt daher die Aufgabe zugrunde, ein Befehls- und/oder Meldegerät der oben genannten Art zu schaffen, bei dem ohne zusätzliche Teile mit dem Halter nahezu die doppelte Dicke von Montageplatten überstrichen werden kann.

Die Aufgabe wird gelöst mit den Merkmalen nach Anspruch 1. Mit diesem Meldegerät wird durch Wendbarkeit und axial-außermittige Anordnung des Teilgewindes nahezu eine Verdopplung des überstrichenen Dickenbereichs von Montageplatten ermöglicht.

Sind die aufeinanderliegenden Flächen der ersten, zweiten und dritten Steigungssegmente als V-förmige Passung ausgebildet, so wird hiermit die Reibkraft vergrößert, was eine höhere Steigung der Steigungssegmente bei ausreichend gegebener Selbsthemmung ermöglicht.

Eine Ausführungsform, bei der die ersten, zweiten und dritten Steigungssegmente überhängend abfallende Absätze aufweisen, bringt den Vorteil mit sich, nach dem wendebedingten 180°-Umspulen des Halterings die Drehbewegung zur Befestigung von definierter Axiallage aus zu beginnen. Damit wird ein zufälliges Verschieben in der Nullage, bei der das Kopplungselement und das Teilgewinde fluchten, verhindert.

Außerdem ist es vorteilhaft, wenn aus der ersten und/oder zweiten Andruckfläche des Halters eine Schraubenspitze hervorragt, da sich mit dieser eine zusätzliche Verdrehsicherung des Halters erzielen läßt.

Eine Ausführung der Erfindung wird im folgenden anhand einer Zeichnung näher erläutert. Dabei zeigen:
- FIG 8: das Gehäuseoberteil eines erfindungsgemäßen Befehls- und/oder Meldegeräts mit einem Wendehalter,
- FIG 9: der Haltering eines Wendehalters gemäß FIG 8 im Schnitt,
- FIG 10: das Gehäuseunterteil mit Halterung des Wendehalters.

Das erfindungsgemäße Befehls- und/oder Meldegerät geht von dem anhand der FIG 1 bis 7 ausführlich beschriebenen Gerät aus.

Bei dem erfindungsgemäßen Befehls- und/oder Meldegerät hat der Halter ein Gehäuseoberteil 23, welches mit zwei Steigungssegmenten 30 mit der Steigung 20 versehen ist. Diese gleichen vollkommen den Steigungssegmenten 17 des entsprechenden Gehäuseunterteils 14 (siehe FIG 8 und 10). Der Haltering 5 hat jeweils dazu passende Steigungssegmente 28 mit der Steigung 6 wie in FIG 9 dargestellt. Durch die außermittige Anordnung eines Teilgewindes 18 am Haltering 5 ergibt sich ein Wendehalter, mit dem sich eine größere Montageplattenstärke überstreichen läßt. Je nach Dicke der Montageplatte 3 erfolgt der Andruck des Halters über die Andruckfläche 4 des Gehäuseunterteils 14 oder bei Wendung des Halters über eine zweite Andruckfläche 31 des Gehäuseoberteils 23 (siehe FIG 8).

Überhängend abfallende Absätze 22 der Steigungssegmente 17,28,30 am Haltering 5 sowie am Gehäuseoberteil 23 und am Gehäuseunterteil 14 ermöglichen nach dem wendebedingten 180°-Umspulen des Halterings 5 die Drehbewegung zur Befestigung von einer definierten Axiallage aus zu beginnen. Damit wird ein zufälliges Verschieben in der Nullage, bei der das Kopplungselement 16 und das Teilgewinde 18 fluchten, verhindert.

Eine zusätzliche Verdrehsicherung des Halters wird über zwei gegenläufig montierte Schraubenspitzen 24 erzielt, die aus den Andruckflächen 4,31 von Unterteil 14 und Oberteil 23, wie z.B. in FIG 8 angedeutet, etwas hervorragen und sich formschlüssig in die Rückseite der Montageplatte 3 eindrücken.

Das beschriebene Befehlsgerät läßt sich aufgrund der verbesserten Befestigungsvorrichtung durch Einmann-Montage schnell und sicher an einer Montageplatte befestigen.

## Patentansprüche

1. Befehls- und/oder Meldegerat mit einer Rosette (9), die einen zylindrischen Teil aufweist, und mit einem Halter, mit folgenden Merkmalen:
a) das zylindrische Teil ist mit einer Längsnut (11) versehen, von der ausgehend sich an seinem Umfang eine Quernut (12) erstreckt,
b) der Halter hat eine an den Umfang des zylindrischen Teils angepaßte Öffnung (15),
b1) der Halter umfaßt eine von außen drehbare Welle (7) mit Verzahnung (8) und
b2) einen entsprechend gezahnten mit der Welle (7) in Eingriff stehenden Haltering (5),
b3) ein Gehäuseunterteil (14) mit einer ersten Andruckfläche (4), die bei Befestigung des Geräts zum Andruck an eine Montageplatte (3) dient,
c) die beidseitigen schmalen Randflächen des Halterings (5) sind jeweils mit einem ersten Steigungssegment (28) versehen,
d) das Gehäuseunterteil (14) weist an seiner durch die Öffnung (15) gebildeten Innenwand ein zweites Steigungssegment (17) auf,
e) der Halter weist ein Gehäuseoberteil (23) mit einer zweiten Andruckfläche (31) auf,
f) das Gehäuseoberteil (23) ist an seiner durch die Öffnung (15) gebildeten Innenwand mit mindestens einem vierten Steigungssegment (30) versehen,
g) im zusammengesetzten Zustand des Halters der Haltering (5) gleitet bei Drehung mit seinen ersten Steigungssegmenten (28) unter axialer Verschiebung auf dem zweiten (17) und vierten (30) Steigungssegment des Gehäuseunterteils (14) und des Gehäuseoberteils (23) entlang,
h) der Haltering (5) weist an seiner durch die Öffnung (15) gebildeten Innenwand einen Vorsprung (18) auf, der nach Aufstecken des Halters auf den zylindrischen Teil über die Längsnut (11) durch Verdrehen des Halterings (5) in die Quernut (12) soweit unter axialer Verschiebung in Bezug auf das Gehäuseunterteil (14) eindrehbar ist bis die erste (4) bzw. zweite (31) Andruckfläche durch Kraftwirkung des Vorsprungs (18) auf eine Begrenzungskante (13) der Quernut (12) an die Montageplatte (3) gepreßt ist.

2. Befehls- und/oder Meldegerät nach Anspruch 1,
**dadurch gekennzeichnet**, daß der Vorsprung (18) außermittig zwischen den axial gegenüberliegenden Steigungssegmenten (28) liegt.

3. Befehls- und/oder Meldegerät nach Anspruch 1 oder 2,
**dadurch gekennzeichnet**, daß die aufeinanderliegenden Flächen der ersten (28), zweiten (17) und vierten (30) Steigungssegment als V-förmige Passung ausgebildet sind.

4. Befehls- und/oder Meldegerät nach einem der vorangehenden Ansprüche, **dadurch gekennzeichnet**, daß die ersten (28), zweiten (17) und vierten (30) Steigungssegmente überhängend abfallende Absätze (22) aufweisen.

5. Befehl- und/oder Meldegerät nach einem der vorangehenden Ansprüche, **dadurch gekennzeichnet**, daß aus der ersten (4) und/oder zweiten Andruckfläche (31) eine Schraubenspitze (24) hervorragt.

## Claims

1. Control and/or signalling device with a collar (9) which has a cylindrical part, and with a holder, with the following features:
a) the cylindrical part is provided with a longitudinal groove (11), proceeding from which a transverse groove (12) extends on its periphery;
b) the holder has an opening (15) adapted to the periphery of the cylindrical part;
b1) the holder comprises an externally rotatable shaft (7) with teeth (8); and
b2) a correspondingly toothed securing ring (5) in engagement with the shaft (7);
b3) a lower housing part (14) with a first pressure surface (4) which, during fastening of the device, serves to press against a mounting plate (3);
c) the narrow edge surfaces on each side of the securing ring (5) are each provided with a first helix segment (28);
d) the lower housing part (14) has on its inner wall formed by the opening (15) a second helix segment (17);
e) the holder has an upper housing part (23) with a second pressure surface (31);
f) the upper housing part (23) is provided on its inner wall formed by the opening (15) with at least a fourth helix segment (30);
g) with the holder in the assembled state, the securing ring (5) upon rotation slides with its first helix segments (28), accompanied by axial displacement, along the second (17) and fourth (30) helix segment of the lower housing part (14) and the upper housing part (23);
h) the securing ring (5) has on its inner wall formed by the opening (15) a projection (18) which, once the holder has been placed on to the cylindrical part by way of the longitudinal groove (11), can be rotated by twisting the securing ring (5) into the transverse groove (12), accompanied by axial displacement with respect to the lower housing part (14), until the first (4) or second (31) pressure surface is pressed, by the force action of the projection (18) on a limiting edge (13) of the transverse groove (12), against the mounting plate (3).

2. Control and/or signalling device according to claim 1, characterized in that the projection (18) is located off-centre between the axially opposite helix segments (28).

3. Control and/or signalling device according to claim 1 or 2, characterized in that the surfaces of the first (28), second (17) and fourth (30) helix segments, lying one on top of the other, are formed as a V-shaped fit.

4. Control and/or signalling device according to one of the preceding claims, characterized in that the first (28), second (17) and fourth (30) helix segments have overhanging sloping steps (22).

5. Control and/or signalling device according to one of the preceding claims, characterized in that a screw tip (24) projects from the first (4) and/or second pressure surface (31).

## Revendications

1. Appareil de commande et/ou de signalisation comportant une rosette (9), qui comporte une partie cylindrique, et un support, ayant les caractéristiques suivantes :
a) la partie cylindrique est munie d'une rainure (11) longitudinale, à partir de laquelle s'étend sur son pourtour une rainure (12) transversale,
b) le support a une ouverture (15) adaptée au pourtour de la partie cylindrique,
b1) le support comprend un arbre (7) pouvant être tourné de l'extérieur et comportant une denture (8) et
b2) un anneau (5) de maintien denté de manière correspondante et en prise avec l'arbre (7),
b3) une partie inférieure (14) de boîtier comportant une première surface (4) d'appui, qui sert à appuyer sur une plaque (3) de montage lorsque l'appareil est fixé,
c) les surfaces de bord étroites des deux côtés de l'anneau (5) de maintien sont munies chacune d'un premier segment (28) de rampe,
d) la partie inférieure (14) de boîtier comporte sur sa paroi intérieure formée par l'ouverture (15) un second segment (17) de rampe,
e) le support comporte une partie (23) supérieure de boîtier ayant une seconde surface (31) d'appui,
f) la partie supérieure (23) de boîtier est munie sur sa paroi intérieure formée par l'ouverture (15) d'au moins un quatrième segment (30) de rampe,
g) lorsque le support est assemblé, le noyau (5) de maintien glisse, lorsqu'on le fait tourner, par ses premiers segments (28) de rampe tout en étant décalé axialement le long du second (17) et du quatrième (30) segment de rampe de la partie inférieure (14) du boîtier et de la partie supérieure (23) du boîtier,
h) l'anneau (5) de maintien comporte, sur sa paroi intérieure formée par l'ouverture (15), une saillie (18), qui, après que le support est enfiché sur la partie cylindrique par l'intermédiaire de la rainure (11) longitudinale, peut être tournée par rotation de l'anneau (5) de maintien dans la rainure (12) transversale tout en étant décalé axialement par rapport à la partie (14) inférieure du boîtier, jusqu'à ce que la première (4) et la seconde (31) surface d'appui soient pressées sur la plaque (3) de montage par application de la force de la saillie (18) sur un bord (13) de limitation de la rainure (12) transversale.

2. Appareil de commande et/ou de signalisation suivant la revendication 1,
caractérisé en ce que la saillie (18) est excentrée entre les segments (28) de rampe opposés axialement.

3. Appareil de commande et/ou de signalisation suivant la revendication 1 ou 2,
caractérisé en ce que les surfaces superposées du premier (28), du second (17) et du quatrième (30) segment de rampe forment un ajustement en V.

4. Appareil de commande et/ou de signalisation suivant l'une des revendications précédentes,
caractérisé en ce que les premier (28), second (17) et quatrième (30) segments de rampe comportent des gradins descendant en devers.

5. Appareil de commande et/ou de signalisation suivant l'une des revendications précédentes,
caractérisé en ce qu'une pointe (24) de vis fait saillie de la première (4) et/ou de de la seconde surface (31) d'appui.
